# EUROPÄISCHE PATENTSCHRIFT

(11) **EP 3 079 858 B1**
(45) Veröffentlichungstag und Bekanntmachung des Hinweises auf die Patenterteilung: **23.05.2018**
(21) Anmeldenummer: 14787119.8
(22) Anmeldetag: 09.10.2014
(51) Int. Cl.: B24B 41/06, B23Q 1/76, B24B 5/42

(54) **SCHLEIFMASCHINE MIT EINER LÜNETTE ZUM ABSTÜTZEN VON ZENTRISCHEN WERKSTÜCKBEREICHEN WÄHREND DER BEARBEITUNG VON ZENTRISCHEN UND/ODER EXZENTRISCHEN WERKSTÜCKBEREICHEN INSBESONDERE LAGERSTELLEN AN KURBELWELLEN**
GRINDING MACHINE HAVING A STEADY REST FOR SUPPORTING CENTRAL WORKPIECE REGIONS DURING THE MACHINING OF CENTRAL AND/OR ECCENTRIC WORKPIECE REGIONS, IN PARTICULAR BEARING POINTS ON CRANKSHAFTS
RECTIFIEUSE ÉQUIPÉE D'UNE LUNETTE DESTINÉE À SOUTENIR DES RÉGIONS CENTRÉES D'UNE PIÈCE PENDANT L'USINAGE DE RÉGIONS CENTRÉES ET/OU EXCENTRIQUES DE LA PIÈCE, EN PARTICULIER DE RÉGIONS DE PALIERS DE VILEBREQUINS

(30) Priorität: 09.12.2013 DE 102013225292
(43) Veröffentlichungstag der Anmeldung: 19.10.2016
(73) Patentinhaber: Erwin Junker Maschinenfabrik GmbH, 77787 Nordrach (DE)
(72) Erfinder: JUNKER, Erwin, 77815 Bühl/Baden (DE)
(74) Vertreter: Leske, Thomas
(86) Internationale Anmeldenummer: PCT/EP2014/071650
(87) Internationale Veröffentlichungsnummer: WO 2015/086190

(56) Entgegenhaltungen:
- WO-A1-98/03303
- WO-A1-2008/104571
- DE-A1- 3 734 734
- DE-A1- 19 962 796
- DE-B3-102011 015 205
- GB-A- 1 000 271
- SU-A1- 642 131
- US-A- 5 486 130

## Beschreibung

Die Erfindung betrifft eine Schleifmaschine mit einer Lünette zum Abstützen von zentrischen Werkstückbereichen während der Bearbeitung von zentrischen und/oder exzentrischen Werkstückbereichen, insbesondere an Wellenteilen, von insbesondere Kurbelwellen, welche während des Schleifens an die Lagerstellen angelegt wird.

Lünetten zum Abstützen von zentrischen Werkstückbereichen während der Bearbeitung von zentrischen und/oder exzentrischen Werkstückbereichen, insbesondere Lagerstellen an insbesondere Kurbelwellen, sind bekannt. Diese Lünetten dienen dazu, so genannte relativ weiche Werkstücke wie beispielsweise Kurbelwellen während des Schleifens zusätzlich so abzustützen, dass durch das Einbringen der Schleifkräfte möglichst keine oder zumindest nur eine sehr geringe Deformation des zu schleifenden Werkstückes auftritt.

Auf Schleifmaschinen zum Schleifen von Kurbelwellen kommen in bekannter Weise häufig Lünetten von der Firma AROBOTECH zum Einsatz, welche vorzugsweise bis zu Wellendurchmessern oder Hauptlagerdurchmessern an Kurbelwellen von beispielsweise 70 - 80 mm eingesetzt werden. Für größere Wellenteile oder Kurbelwellen, bei denen Lünetten zum Schleifen eingesetzt werden müssen, sind die bekannten Lünetten insoweit nachteilig, als sie meist einen großen Bauraum benötigen. Wegen der Bauart müssen diese bekannten Lünetten mit ihren Lünettenbacken beim Beladen bzw. Entladen der Werkstücke zurückgezogen werden. Diese bekannten Lünetten weisen in der Regel drei Backen auf, welche meist eine PKD (Polykristalline Diamant-)-Beschichtung oder CBN (kubisches Bornitrit-)-Beschichtung aufweisen. Durch die Ausführung mit drei Backen ist die jeweilige abzustützende Lagerstelle "eingespannt", wobei die abzustützenden Lagerstellen in einem Durchmesserbereich von größer 180°, beispielsweise ca. 210°, zwischen den PKD-beschichteten Stützelementen abgestützt werden. Das Werkstück ist in seiner Lage damit selbstzentrierend "eingespannt", und die Zustellung der Backen erfolgt in Richtung der Werkstückmitte, d.h. zentrisch zum Lagerdurchmesser. Die Bewegungen der einzelnen Lünettenbacken sind mechanisch zwangsgekoppelt, was zu einem relativ komplizierten mechanischen System führt. Die "Einspannung" an fixen drei Punkten erfordert eine bereits gut zumindest vorbearbeitete Lagerstelle zum Anstellen der Lünette. Ein Nachführen der Lünette ist aus den vorstehend genannten Gründen daher schwierig. Die mechanische Zwangskoppelung der drei Backen der bekannten Lünette erfordert relativ große, bei der Zustellung zu übernehmende Kräfte, die zu verstärkten Laufspuren an der abzustützenden Lagerstelle führen. Insbesondere für Werkstücke größerer Durchmesser ist es bekannt, so genannte Zwei-Punkt-Lünetten einzusetzen, wobei die das Werkstück abstützenden zwei unabhängig zustellbaren Auflagen, gegebenenfalls PKD-bestückt, jeweils mittels separaten CNC-Achsen zugestellt werden. Der Einsatz von zwei separaten CNC-Achsen erhöht den Bauaufwand solcher Lünetten und damit deren Kosten, weshalb derartige Lünetten technisch sehr aufwändig und sehr teuer sind. Die beiden Stützpunkte bzw. -bereiche einer derartigen bekannten Zwei-Punkt-Lünette sind in der Regel rechtwinklig zueinander angeordnet, wobei ein Stützpunkt bzw. -bereich von unten an die Lagerstelle und ein Stützpunkt bzw. -bereich gegenüber der Schleifscheibe angeordnet und an die Lagerstelle zugestellt werden.

Es sind auch schon Lünetten bekannt, bei welchen zwei Stützstellen zwangsgesteuert angeordnet sind wie in US 6 257 972 B1, wobei gegen eine dritte, gegenüberliegende Stützstelle abgestützt wird. Die einzelnen Lünettenstützelemente sind entweder mittels Anschlägen festgelegt oder an einem fertiggeschliffenen Lager angelegt. Ein Nachführen der Lünette beim Schleifen des Lünettensitzes ist nicht vorgesehen und auch nicht möglich.

Aus DE 10 2011 015 205 B3 ist des Weiteren eine Zwei-Punkt-Lünette mit fest zueinander angeordneten zwei Stützteilen bekannt. Diese bekannte Lünette zum horizontalen und vertikalen Abstützen eines Werkstücks weist zwei in seitlichem Abstand zueinander angeordnete relativ zum Werkstück verstellbare und somit zum Lünettenarm nicht fest angeordnete Stützglieder auf, wobei ein an einem Sockel beweglich geführter Stellschieber die Stützglieder trägt und der Stellschieber in radialer Richtung zum Werkstück beweglich ist, so dass beide Stützglieder gemeinsam zum Werkstück zustellbar sind. Die radiale Verstellung des Stellschiebers wird gegen die Wirkung einer Feder vorgenommen, so dass ein zusätzliches Bewegungsglied zwischen abzustützendem Werkstück und eigentlichem Lünettenstützsockel vorhanden ist. Die bestenfalls erzielbare Rundlaufgenauigkeit liegt daher im Bereich von wenigen µm.

Des Weiteren ist aus GB 1 000 271 A, die die Basis für den Oberbegriff des Anspruchs 1 bildet, eine Lünette bekannt, welche zur Anlage an einem Werkstück mit definiertem Durchmesser gedacht ist. Die vorhandenen Stützteile sind parallel zueinander ausgerichtet und bilden keinen Öffnungswinkel. Es ist auch kein gabelartig sich öffnendes Prisma vorhanden, so dass diese Lünette für Bauteile unterschiedlicher Durchmesser nicht geeignet ist.

Aus WO 2008/104571 A1 ist eine Lünette bekannt, welche den Werkstückumfang teilweise umgreift und bei welcher die Stützteile in einer sich nach vorn in Richtung auf das Werkstück verjüngenden Öffnung befindet. Ein sich gabelartig öffnendes Prisma ist bei diesem Stand der Technik nicht beschrieben. In US 5,486,130 ist ebenfalls eine Lünette beschrieben, bei welcher jedoch ebenfalls parallel zueinander angeordnete Flanken einer gabelartig ausgebildeten Lünette vorgesehen sind, wobei die Stützflanken kein sich öffnendes Prisma bilden.

Der vorliegenden Erfindung liegt daher die Aufgabe zugrunde, eine Schleifmaschine mit einer derartigen Lünette bereitzustellen, mittels welcher Rundheitsfehler an zentrischen Werkstückbereichen bis auf unter 1 µm verbessert werden können.

Derartige hochgenaue Rundlaufschleifergebnisse werden mit einer Schleifmaschine mit den Merkmalen gemäß Anspruch 1 erzielt. Zweckmäßige Weiterbildungen sind in den jeweiligen abhängigen Ansprüchen definiert.

Nachfolgend sollen bei Verwendung des Begriffs "zentrische Lagerstelle" auch solche zentrischen Werkstückbereiche verstanden und gemeint sein, welche zwar zentrisch ausgebildet sind, aber nicht zwingend am Werkstück bzw. Wellenteil eine Lagerstelle sind. Gleichermaßen soll unter "Wellenteil" auch ein Werkstück verstanden werden, welches einen zentrischen Werkstückbereich aufweist.

Eine zum Abstützen von zentrischen Lagerstellen während der Bearbeitung von zentrischen und/oder exzentrischen Lagerstellen an Wellenteilen vorgesehene erfindungsgemäße Lünette, welche unter Einsatzbedingungen aus einer zurückgezogenen Position zum Zwecke des Abstützens während des Schleifens in eine Abstützposition an eine Lagerstelle des Wellenteils, welches insbesondere eine Kurbelwelle ist, gebracht wird, ist so ausgebildet, dass zumindest zwei an die Lagerstelle zustellbare Stützteile vorgesehen sind. Diese Stützteile sind die eigentlichen abstützenden Elemente und stützen die zu schleifende Lagerstelle an jeweiligen voneinander beabstandeten Umfangsbereichen ab, wobei der Abstand der Umfangsbereiche durch den Abstand der beiden Stützteile zueinander bestimmt ist. Die Lünette ist an ihrem vorderen Bereich in Form eines Prismas ausgebildet, welches gabelartig das Wellenteil mit seiner abzustützenden Lagerstelle in der Abstützposition abstützt. Das Prisma weist zwei die Gabel bildende Schenkel eines Lünettenarmes auf, welche jeweils ein Stützteil tragen, wobei die Stützteile unter Bildung eines Öffnungswinkels zueinander an je einer Seitenflanke der Schenkel des Prismas angeordnet sind. Die Position der Stützteile zueinander und zum Lünettenarm ist fest. Das bedeutet, dass die Anbringungsorte der Stützteile zueinander fest angeordnet sind. Darüber hinaus ist die Lünette mit ihrem sich nach oben öffnenden Prisma in ihrer Abstützposition untermittig zur Längsachse der Lagerstelle angeordnet, wobei eine zwischen beiden Stützteilen durch deren Anbringung an den Schenkeln des Lünettenarms gebildete Winkelhalbierende einen festen spitzen Winkel zu einer durch die Längsachse der Lagerstelle verlaufenden Senkrechten aufweist. Die Lünette weist eine so genannte CNC-Achse auf, welche eine gesteuerte Zustellung der Lünette entlang dieser Winkelhalbierenden so weit an die Lagerstelle ermöglicht, dass sich die Lünette in ihrer Abstützposition befindet und dort das zu schleifende Wellenteil aufnimmt und abstützt.

Die zueinander feste Anordnung der Stützteile an den Seitenflanken des Prismas der Lünette in Verbindung mit der untermittigen Aufnahme des zu schleifenden Wellenteils zum Zwecke des Abstützens mit der zwischen den Stützteilen gebildeten Winkelhalbierenden durch die Längsachse der Lagerstelle wird erreicht, dass der Stützbereich der Lünette unter einer durch die Rotationsachse der Schleifscheibe und die Mittellängsachse des Werkstücks gebildeten Ebene, d.h. unter der Werkstückmitte, d.h. untermittig liegt. Dies ist insoweit beim Schleifen vorteilhaft, als die abzustützende Lagerstelle nie exakt rund ist, und durch die erfindungsgemäße Abstützposition und Ausbildung der Lünette werden die stets normalerweise vorhandenen Rundheitsfehler beim Schleifen an der Lagerstelle nicht fortlaufend auf die zu schleifende Lagerstelle wieder abgebildet bzw. kopiert. Wenn - wie im Stand der Technik - die Stützpunkte zweier Stützteile symmetrisch exakt genau gegenüber der Schleifstelle angeordnet sind, werden nämlich die Unrundheiten während des Schleifens der Lagerstelle wieder abgebildet, was bedeutet, dass während des Schleifens die Unrundheiten nicht nur in Form und Größe fortlaufend erhalten bleiben, sondern gegebenenfalls auch noch verstärkt werden.

Mit der erfindungsgemäßen Schleifmaschine wird ein behutsameres Abstützen der jeweiligen Lagerstelle realisiert, weil mittels ihrer separaten CNC-Achse eine gezielte Anstellung an die Lagerstelle ermöglicht wird, und zwar derart, dass die Winkelhalbierende zwischen den zwei Stützteilen stets durch die Mittellängsachse bzw. Rotationsachse der Lagerstelle verläuft. Und dies führt auch zu einer Verringerung der Laufspuren durch die Lünette am Abstützort.

Die gesamte prismenartige Abstützung der erfindungsgemäßen Lünette hat einen gewählten Winkel des Prismas, d.h. der Seitenflanken des Lünettenarms des Prismas zueinander, in dem die abzustützende Lagerstelle wie in der Art einer Gabel aufgenommen und abgestützt ist. Je nach Form und Größe des abzustützenden Wellenteils und nach den technischen Anforderungen kann eine jeweilige eingesetzte Lünette einen unterschiedlichen Winkel des Stützprismas aufweisen. Prinzipiell ist es vorzugsweise auch möglich, dass die Schenkel des Prismas des Lünettenarmes verstellbar zueinander angeordnet sind, um die Lünette noch besser an unterschiedliche Durchmesseranforderungen zu schleifender und abzustützender Wellenteile anzupassen.

In einem solchen Fall ist es jedoch erforderlich, dass die Seitenflanken des Prismas in ihrer jeweiligen für eine definierte Abstützaufgabe angepassten Winkelanordnung derartig fest zueinander angeordnet bzw. verriegelt sind, dass die Stützteile für die abzustützende Aufgabe eine fixe Position zueinander aufweisen und möglicherweise auftretende Schwingungen dennoch nicht zur Verstärkung der Bearbeitungsfehler führen können. Durch die erfindungsgemäße Auswahl der Winkel- und Anordnungsverhältnisse der Stützteile an den Seitenflanken der jeweiligen Schenkel des Prismas des Lünettenarmes können vorteilhafterweise die Rundheiten am Werkstück während des Schleifens erheblich verbessert werden, so dass Rundheitsfehler von kleiner 1 µm oder sogar deutlicher geringer erzielbar sind. Die erfindungsgemäße Lünette schafft aber nicht nur verbesserte Rundheiten im allgemeinen Sinn, sondern mit der erfindungsgemäßen Lünette werden auch verringerte Welligkeiten bei Welligkeiten niedrigerer Ordnung erreicht, wodurch sich Werkstücke mit höchster Qualität herstellen lassen, und zwar ohne dass nach dem Schleifen weitere separate Arbeitsfolgen bzw. Arbeitsverfahren eingesetzt werden müssen. Die Möglichkeit der Herstellung hochgenauer Werkstücke ohne zusätzlichen Herstellungsaufwand führt zur erheblichen Kostensenkungen. Die erfindungsgemäße Lünette stellt somit eine technisch gute und preisgünstige Lösung dar, welche insbesondere auch für größere Wellenteile mit einem Durchmesser von vorzugsweise größer als ca. 70 mm und vorzugsweise auch für Kurbelwellen zum Einsatz kommt, wobei die Hauptlagerdurchmesser gegebenenfalls auch kleiner als 70 mm im Durchmesser sein können. Für kleinere bis mittlere Werkstückabmessungen ist die erfindungsgemäße Lünette natürlich ebenfalls einsetzbar.

Zusätzliche Rundheitskorrekturen durch Aufprägen von Korrekturfunktionen auf die X-Achse, welche messwertbasiert sind und von der Steuereinrichtung der Schleifmaschine berechnet und ausgeführt werden, werden üblicherweise für exzentrische Lagerstellen wie Hublager bereits angewendet. Es versteht sich, dass derartige Rundheitskorrekturen auch für die Hauptlager angewendet werden können. Zur weiteren Verbesserung der Rundheit an den zentrischen Lagerstellen kann eine derartige Rundheitskorrektur zusätzlich zum Einsatz der erfindungsgemäßen Lünette angewendet werden.

Vorzugsweise wird die Lünette zum Abstützen an eine fertig geschliffene Lagerstelle angestellt; es ist jedoch auch möglich, dass die Lünette an eine gerade geschliffene Lagerstelle angestellt wird, wobei im letzteren Fall nicht nur eine Abstützung in Folge des Eigengewichts des zu schleifenden Werkstückes sondern auch zumindest in gewissem Maße durch die Schleifscheibe ausgeübte Schleifdrücke von der Lünette aufgenommen werden.

Gemäß einer Weiterbildung der Erfindung ist der das Prisma tragende Lünettenarm mittels nur eines auf eine Gewindespindel arbeitenden Stellmotors zwischen der zurückgezogenen und der Abstützposition bewegbar. Dadurch wird erreicht, dass die Stützteile, welche in einer festen winkelmäßigen Beabstandung innerhalb des Prismas angeordnet sind, an die zu stützende Lagerstelle zum Zwecke des Abstützens der Lagerstelle zuverlässig und reproduzierbar angelegt werden.

Vorzugsweise bildet die Winkelhalbierende einen derartigen Winkel zur Senkrechten, dass beim Schleifen ausgeübte resultierende, durch die Schleifscheibe verursachte Kräfte die Lagerstelle in das Prisma an die Stützteile, die Lagerstelle fixierend, drücken. Der Winkel der Winkelhalbierenden zur Senkrechten ist dabei so gewählt, dass die Stützteile bezogen auf die Mittellängsachse des Werkstückes untermittig anliegen, so dass beim Schleifen die Schleifkräfte das Werkstück sozusagen in das Prisma und an die Stützteile drücken. Dadurch wird das Werkstück im Prisma und durch die Stützteile lagefixierend gehalten.

Weiter vorzugsweise ist die Lünette mit ihrer CNC-Zustellachse so ausgebildet, dass sie so weit an die zu stützende Lagerstelle bzw. das zu stützende Werkstück gefahren werden kann, dass die Abstützposition einer Endposition der Zustellung entspricht, so dass die Lünette an einer fertiggeschliffenen Lagerstelle oder einem fertiggeschliffenen Wellenteil anliegt. Es ist jedoch auch möglich, dass die Abstützposition der Lünette eine Position der Zustellung bei noch vorhandenem Schleifaufmaß ist. Das bedeutet, dass die Lünette während des Schleifens, obwohl das Endmaß an der zu schleifenden Lagerstelle noch nicht erreicht ist, dennoch stützend an dieser gerade geschliffenen Lagerstelle angreift, wobei während des Schleifens unter gleichzeitigem Abstützen der Lagerstelle das Prisma, d.h. der Lünettenarm mit dem Prisma, mit den Stützteilen bis zum Fertigmaß nachgeführt wird. Besonders bevorzugt ist, wenn die CNC-gesteuerte Zustellung des Prismas synchron zur Schleifscheibenzustellung erfolgt. Durch die Ausführung, dass die Zu-stellachse der Lünette und die Zustellachse der Schleifscheibe jeweils CNC-gesteuert sind, sind beide Achsen für sich frei programmierbar.

Bei einem Anstellen der Lünette an eine fertiggeschliffene Lagerstelle kann mittels der CNC-Steuerachse die Lünette auf eine vorbestimmte Position genau an das Werkstück angestellt werden. Die Endposition entspricht dabei dem Fertigmaß des zu schleifenden Werkstückes. Insbesondere bei einem Verfahren der Lünette, d.h. des Lünettenarmes mit dem Prisma, in die gewünschte Endposition mittels hydraulischer Betätigungseinrichtungen, ist es möglich, die zuvor fertiggeschliffenen Lagerstellen mittels des Stützprismas der Lünette zuverlässig abzustützen. Eine derartige Lünette ist verhältnismäßig einfach im Aufbau und demzufolge auch kostengünstig in der Herstellung.

Vorzugsweise ist es jedoch auch möglich, die Lünette für eine Abstützung an einer Lagerstelle einzusetzen, die gerade geschliffen wird, bei welcher daher ein gewisses Schleifaufmaß noch vorhanden ist. Dazu ist es erforderlich, dass die Lünette entsprechend dem während des Schleifens noch vorhandenen Schleifaufmaß, d.h. der Differenz zwischen tatsächlichem Schleifaufmaß und Endmaß, genau nachgeführt wird. Dies bedeutet, dass die Lünette zu jedem Zeitpunkt exakt zu dem in einer Zeiteinheit radial an der Lagerstelle abgeschliffenen Schleifaufmaß nachgeführt werden muss. Dazu ist eine Synchronisation zwischen der CNC-Achse der Lünette und der CNC-gesteuerten X-Achse der Schleifscheibe erforderlich. Vorzugsweise lässt sich dies besonders leicht dadurch lösen, dass das Stützprisma am Werkstück mittels einer CNC-gesteuerten Bewegung linear zugestellt wird. Mit einer solchen linearen Zustellung ist es möglich, die Zustellbeträge der X-Zustellachse der Schleifscheibe einerseits und der Zustellachse des Stützprismas andererseits zueinander synchron laufen zu lassen, wobei die Zustellung des Lünettenprismas der Zustellung der Schleifscheibe nachgeführt wird, d. h. beide Zustellachsen sind miteinander elektronisch gekoppelt.

Aus Gründen der Genauigkeit und aus schleiftechnisch sinnvollen Erwägungen heraus kann es vorteilhaft sein, von der exakten Synchronität zwischen X-Zustellachse der Schleifscheibe und CNC-Achse der Lünette abzusehen. Das Stützprisma kann beispielsweise zweitweise während des Schleifens der Lagerstelle auch gezielt so angestellt werden, dass das zu schleifende Wellenteil in einem vorbestimmten Bereich überdrückt wird. Unter "überdrücken" soll im Rahmen dieser Erfindung verstanden werden, dass das Wellenteil beim Schleifen im Bereich von wenigen µm bis mehrere Hundertstel mm über die Spitzenmitten überdrückt wird. Vorzugsweise kann dies auch derart realisiert werden, dass das Stützprisma zeitweise während des Schleifens der Lagerstelle entweder um einen bestimmten geringen Betrag definiert zu niedrig oder zu hoch überdrückt eingestellt wird. Vorzugsweise richtet sich der Grad der Überdrückung nach der zu erzielenden Genauigkeit des zu schleifenden Bauteils wie auch nach den durch die Schleifscheibe in das Werkstück eingebrachten Schleifdrücken. Weitere wichtige Einflussfaktoren sindauch die Geometrie und die Steifigkeit des Werkstückes.

Vorzugsweise werden die jeweiligen Zustellbewegungen der Schleifscheibe und der Lünette mittels ihrer jeweiligen CNC-gesteuerten Achsen in der Art durchgeführt, dass zu jedem Zeitpunkt des Schleifens der Lagerstelle diese definiert exakt auf Spitzenmitte gehalten wird. Es ist jedoch vorzugsweise auch möglich, um ein geringes Maß unter der Mitte oder über der Mitte zu schleifen. Insbesondere die vorzugsweise Ausführungsform des nachlaufenden Zustellens der Lünette ist für das Schleifen von zentrischen Lagerstellen wie beispielsweise den Hauptlagern der Kurbelwelle vorgesehen.

Die erfindungsgemäße Schleifmaschine kann auch zum Schleifen von Nockenwellen oder anderen Wellenteilen eingesetzt werden. Bekanntermaßen sind die zu schleifenden Nocken neben den Lagerstellen angeordnet. Gleichermaßen gilt dies auch für die Hublager an Kurbelwellen, wenn diese beispielsweise im Pendelhubschleifverfahren geschliffen werden. In einem solchem Fall werden die Nocken- oder die Hublager in der Art geschliffen, dass während eines Schleifumlaufs des Werkstückes ungleiche Kräfteverhältnisse durch das Schleifen auf das Werkstück einwirken. Vorzugsweise wird für einen derartigen Anwendungsfall eine Lünette eingesetzt, bei welcher ein an dem Prisma angeordneter zusätzlicher Schwenkhebel vorgesehen ist, welcher an seinem der Schwenkachse gegenüberliegenden Endbereich ein zusätzliches Stützteil aufweist. Wenn bei der erfindungsgemäßen Lünette die Stützteile untermittig an der zu stützenden Lagerstelle angreifen, so ist der Schwenkhebel so dimensioniert, dass das zusätzliche Teil sozusagen von oben in seine Anlageposition an die Lagerstelle angeschwenkt und durch Festlegen des Schwenkhebels in seiner Anlageposition eine zusätzliche Abstützung der Lagerstelle von oben erfolgt. In einem solchen Fall sind vorzugsweise drei Stützteile in der Art einer Dreipunktlagerung für die zu schleifende Lagerstelle vorgesehen. Damit wird erreicht, dass die Lagerstelle zu jedem Zeitpunkt der Bearbeitung fest auf dem Stützprisma aufliegt, auch wenn durch beispielsweise das Pendelhubschleifen oder das Nockenschleifen schwankende Kräfteverhältnisse auch auf die Lünette während des Schleifprozesses einwirken.

Vorzugsweise erfolgt das Schwenken des Schwenkhebels hydraulisch, pneumatisch oder elektrisch. Dadurch wird sichergestellt, dass die zu stützende Lagerstelle immer exakt mit einer voreingestellten wählbaren Kraft auf dem Stützprisma aufliegt. Bei der Ausführung der hydraulischen oder pneumatischen Ansteuerung der Schwenkbewegung ist zur Einstellung der Druckkraft zumeist ein Drucksensor vorgesehen.
Eine weitere vorzugsweise Ausführung ist auch, dass der hydraulisch oder pneumatisch angesteuerte Schwenkhebel bis in einen, beispielsweise durch eine Anschlag, begrenzten Schwenkweg eingeschwenkt wird. In diesem Fall wird dann das Stützteil mittels einer durch eine Feder erzeugten Anpresskraft auf die Lagerstelle gedrückt. Bei der Ausführung der elektrischen Betätigung der Schwenkbewegung wird der Schwenkhebel auf eine vorbestimmte Schwenkposition eingeschwenkt, und die Anpresskraft auf die Lagerstelle wird dadurch erzeugt, dass das Stützteil durch eine mittels einer Feder erzeugte Anpresskraft auf die Lagerstelle gedrückt wird.

Durch die Dimensionierung der Feder lässt sich somit ein vorgewählter Anpressdruck in Abhängigkeit von der jeweiligen Anlageposition des Schwenkhebels und damit des Stützteiles an der gerade geschliffenen, fertiggeschliffenen oder zu schleifenden Lagerstelle einstellen bzw. auswählen.

In gleicher Weise, wie die Herstellung der Anpresskraft durch ein Federelement, lässt sich auch ein hydraulisch oder pneumatisch betätigtes Element einsetzen. Die Dimensionierung der Druckkraft lässt sich dann durch einen Drucksensor ermitteln und einstellen.

Die Anlageposition des zusätzlichen Stützteiles liegt in diesem Fall den Positionen der Stützteile des Prismas gegenüber.

Die Anlageposition kann auf der Winkelhalbierenden der Stützteile des Stützprismas liegen; dies ist aber für die technische Funktion nicht zwingend erforderlich.

Zumeist wird die Position des zusätzlichen Stützprismas sogar nicht auf der Winkelhalbierenden der Stützteile des Stützprismas angeordnet, da ein Versatz aus dieser Position durch die ungleiche Winkelverteilung ein Abbilden von Unrundheiten während des Schleifens der Lagerstelle vermeidet.

Gemäß einer Weiterbildung der Erfindung sind die Stützteile vorzugsweise ebenflächig ausgebildet, so dass bei einer Anlage an der zu stützenden Lagerstelle ein, jedenfalls bei theoretischer Betrachtung, Linienkontakt gegeben ist. Weiter vorzugsweise kann die Oberfläche der Stützteile als konvex gekrümmte Fläche ausgebildet sein. Eine derartig ausgebildete Oberfläche der Stützteile sichert noch besser einen gezielten Kontakt zwischen den Stützteilen und der abzustützenden Oberfläche des jeweiligen Lagerteils, und zwar selbst bei Abweichungen von der zylindrischen Form der Lagerteile. Weiter vorzugsweise sind die Stützteile mit einer Mittelnut versehen, welche die Oberfläche der Stützteile in zwei Stützabschnitte aufteilt. Dadurch kann einerseits eine gute Stützwirkung erzielt werden, weil die Abstützung über die Gesamtbreite eines Stützteils erfolgt. Vorzugsweise sind die stützenden Oberflächen leicht sphärisch ausgebildet und sind deren Seitenkanten gebrochen, damit die abzustützende Oberfläche nicht durch diese beschädigt wird.

Aus Gründen der Verschleißfestigkeit sind die Stützteile vorzugsweise mit CBN- oder PKD-Oberflächen versehen. Dadurch lässt sich eine hohe Lebensdauer der Stützteile realisieren, welche ohnehin an den gabelförmigen Armen des Prismas auswechselbar angebracht sind.

Eine weitere vorzugsweise Ausbildung der Lünette wird dadurch erreicht, dass die Stützteile an den Seitenflanken des Prismas um eine 90°, d.h. senkrecht zur Längsachse (bei Blickrichtung in der durch die Rotationsachse der Schleifscheibe und die des Werkstückes aufgespannten Ebene) des zu schleifenden Wellenteils verlaufende Achse pendelnd gelagert sind. Dieser durch das Pendeln vorhandene Freiheitsgrad der Stützteile sichert ein gleichmäßiges und besseres Anlegen an die abzustützende Oberfläche des Wellenteils, selbst wenn das Wellenteil leicht ballig oder konkav geschliffen sein sollte. Ein weiterer Vorteil dieser zusätzlichen Pendelachse der Stützteile liegt darin, dass es bei nicht ganz zylindrischen Lagerstellen, sei es durch Schleiffehler oder sei es durch eine gewünschte Lagerform, vermieden werden kann, dass die Kanten der Stützteile sich während des Abstützens in die betreffende zu stützende Oberfläche eingraben können und dadurch unerwünschte Schleifspuren hinterlassen würden. Ohne die um 90° zur Längsachse des Lagerteiles pendelnd gelagerte Stützteilanordnung ergäbe sich nämlich bei von der Zylinderform abweichender Form des Lagerteiles kein Linienkontakt für das Abstützen, sondern ein Punktkontakt. Dieser Punktkontakt würde aber eine höhere Hertz'sche Flächenpressung auslösen, was ebenfalls zu Verletzungen der abzustützenden Lageroberfläche führen würde. Demgegenüber wird durch das gleichmäßige Anlegen der Stützteile an die gerade geschliffene und zu stützende Oberfläche eines Lagerteiles insgesamt wegen der geringeren Flächenpressung eine größere Genauigkeit erreicht, so dass auch durch diese Maßnahme die hohe Genauigkeit bezüglich der Rundheit bei Fehlern in der Rundheit von sogar deutlich unter 1 µm erreicht werdenkann.

Gemäß einem weiteren Aspekt der Erfindung wird eine Schleifmaschine bereitgestellt, welche zum Schleifen von zentrischen und/oder exzentrischen Werkstückbereichen bzw. Lagerstellen an Werkstücken bzw. Wellenteilen, insbesondere Kurbelwellen, dient. Zusätzlich weist die Schleifmaschine eine Steuervorrichtung auf, mittels welcher während des Schleifens oder nach dem Schleifen der Lagerstelle mittels einer Schleifscheibe die Lünette an dem zentrischen Werkstückbereich anstellbar und die Schleifscheibe einsatzgemäß bis zum Fertigmaß der Lagerstelle zustellbar ist. Mit einer derartigen Schleifmaschine können Rundheitsabweichungen von sogar deutlich unter 1 µm erreicht werden, selbst wenn beispielsweise beim Schleifen der Hublager von Kurbelwellen oder der Nocken von Nockenwellen im Pendelhubschleifen geschliffen wird und dadurch variierende Krafteinleitungen in das zu schleifende Bauteil zu verzeichnen sind.

Vorzugsweise weist die erfindungsgemäße Schleifmaschine eine Messvorrichtung auf, welche Messsignale des Durchmessers des Werkstückbereiches für die Zustellposition der Lünette an dem Werkstückbereich an die Steuereinrichtung übermittelt. Auf deren Basis werden die Zustellpositionen von Lünette und Schleifscheibe gesteuert. Beim Anlegen der Lünette an einen zentrischen Werkstückbereich, welcher gerade geschliffen wird, mithin noch ein Aufmaß gegenüber seinem Fertigmaß aufweist, ist die Lünette vorzugsweise entsprechend dem durch die Schleifscheibe noch belassenen jeweiligen tatsächlichen Schleifaufmaß der Schleifscheibe nachführbar.

Es versteht sich, dass die Steuer- und Messvorrichtung sowohl in einer Einheit vorgesehen sein kann, als auch als separate Vorrichtungen vorliegen können, d.h. eine separate Steuereinrichtung und eine separate Messvorrichtung vorgesehen sein können, wobei die Messvorrichtung auf Basis der gemessenen Werte Messsignale erzeugt, welche in die Steuereinrichtung eingegeben werden, so dass die Steuereinrichtung letztlich die synchrone oder leicht asynchrone Steuerung der Zustellung der Lünette und der Schleifscheibe an die jeweilige zu schleifende Lagerstelle für den Fall realisiert, bei welchem die Lünette entsprechend einem ständig durch den Schleifvorgang sich verringernden Schleifaufmaß bis zum Fertigmaß der zu schleifenden Stelle nachgeführt wird. Ein von der Synchronität der Zustellung abweichender Fall kann beispielsweise dann vorliegen, wenn mittels der Lünette das zu schleifende Bauteil geringfügig überdrückt werden soll, um beispielsweise mittels der Schleifscheibe in das Bauteil eingeleitete Schleifkräfte zu kompensieren, so dass sich auch dadurch das Schleifergebnis verbessert.

Gemäß einer Weiterbildung ist die Steuereinrichtung so ausgebildet, dass unter Verwendung von Messwerten auf Basis von ermittelten Rundheitsfehlern eine zusätzliche Rundheitskorrektur auf die CNC-gesteuerte X-Achse der Schleifscheibe in der Art einer Überlagerung auf die Zustellwerte der Schleifscheibe aufgeprägbar ist.

Weitere Ausgestaltungen und Details der Erfindung werden nun anhand von Ausführungsbeispielen durch die nachfolgende Zeichnung beschrieben. In der Zeichnung zeigen:
- Figur 1:: der prinzipielle Aufbau einer Schleifmaschine mit angeordneter erfindungsgemäßer Lünette;
- Figur 2:: eine vergrößerte Detailansicht einer gerade geschliffenen Kurbelwelle mit Lünette in zurückgezogener und abstützender Position;
- Figur 3:: eine prinzipielle Vorderansicht auf die Lünette in Richtung des Pfeiles V gemäß Figur 2;
- Figur 4:: eine Schnittansicht durch den Lünettenarm zur Darstellung der Führung zur linearen Bewegung des Stützprismas entlang der Schnittebene W-W;
- Figur 5:: ein Schnitt durch die Lünette entlang der Schnittebene U-U gemäß Figur 4;
- Figur 6A:: eine Schnittansicht durch ein Stützteil im Stützprisma der Lünette mit Schwenkbarkeit des Stützteils um eine 90° zur Längsachse des abzustützenden Wellenteils verlaufenden Schwenkachse;
- Figur 6B:: eine Draufsicht auf ein am Prisma der Lünette angeordnetes Stützteil;
- Figur 6C:: eine perspektivische Darstellung eines Stützteiles mit Mittelnut und Schwenkbarkeit gemäß den Figuren 6A bzw. 6B;
- Figur 7:: eine perspektivische Darstellung der Lünette mit Stützteilen gemäß Figuren 6A bzw. 6B; und
- Figur 8:: eine Detailseitenansicht gemäß Figur 2, jedoch für ein weiteres Ausführungsbeispiel mit einem zusätzlichen Schwenkhebel an der Lünette, an welchem ein drittes Stützteil angebracht ist.

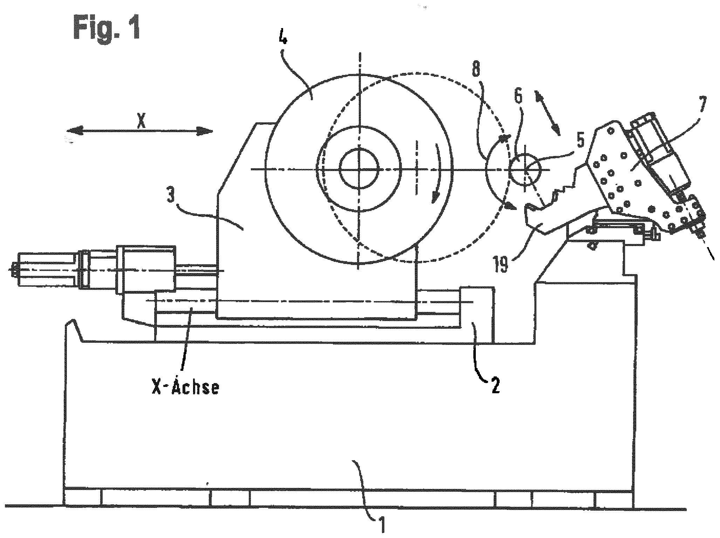

In Figur 1 ist in Seitenansicht der prinzipielle Aufbau einer mit einer erfindungsgemäßen Lünette versehenen Schleifmaschine dargestellt. Ein Maschinenbett 1 trägt einen Kreuzschlitten für eine CNC-gesteuerte Bewegung einer auf einem Schleifspindelstock 3 gelagerten Schleifscheibe 4 zu deren Zustellung an das zu schleifende, eine Längsachse 5 aufweisende Werkstück 6. Der Schleifspindelstock 3 ist in an sich bekannter Weise in Kreuzschlittenbauweise ausgeführt, wodurch es möglich ist, dass der Schleifspindelstock 3 mit der Schleifscheibe 4 parallel zur Längsmittelachse des Werkstückes, d.h. dessen Rotationsachse, und rechtwinklig zu dieser Mittellängsachse des Werkstückes zugestellt werden kann. Das Werkstück 5 ist auf einem nicht dargestellten Werkstückspindelstock gehalten, wobei die Schleifscheibe 4 relativ zur Mittellängsachse des Werkstückes 5 entlang einer CNC-gesteuerten Z-Achse bewegbar ist. Der nicht dargestellte Werkstückspindelstock ist im vorderen Bereich der Schleifmaschine auf dem Maschinenbett auf einem Schleiftisch gelagert, welcher auch den Rotationsantrieb für das Werkstück, einen Reitstock und eine Lünette 7 zur Abstützung des Werkstückes an einer Lagerstelle aufnimmt. Vorzugsweise wird die Lagerstelle abgestützt, welche gerade geschliffen wird. Es ist jedoch auch möglich, eine Lagerstelle zu stützen, welche bereits geschliffen worden ist. Der nicht dargestellte Werkstückantrieb ist symbolisch durch den Doppelpfeil 8 dargestellt, ist ebenfalls CNC-gesteuert und wird als C-Achse bezeichnet.

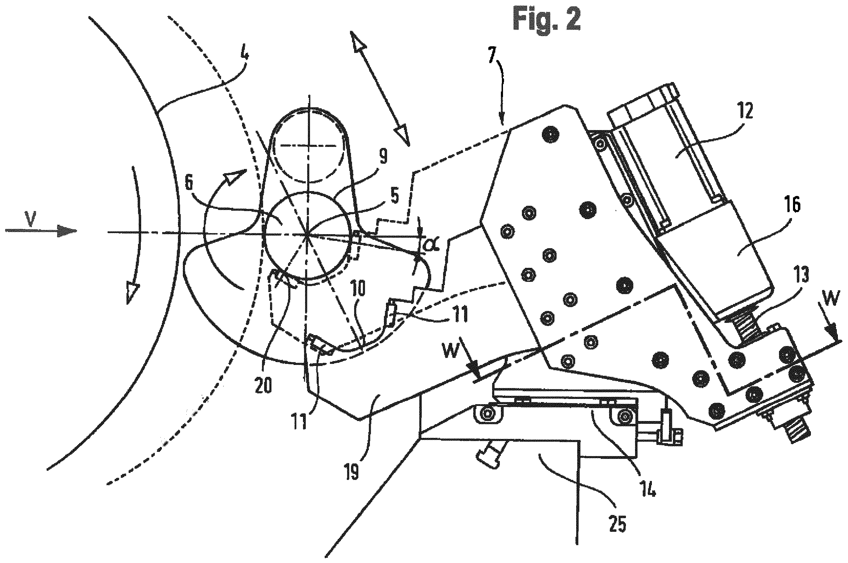

In Figur 2 ist eine Detailansicht der Schleifmaschine gemäß Figur 1 gezeigt, in welcher eine Schleifscheibe 4 gerade im Eingriff mit einem Werkstück 6 in Form eines Hauptlagers einer Kurbelwelle geschliffen wird. Die Mittellängsachse des Hauptlagerzapfens verläuft parallel zur Rotationsachse der Schleifscheibe 4. Auf dem Schleiftisch 25 ist die Lünette 7 angebracht. Die Lünette 7 weist eine an einem Lünettenarm ausgebildete Ausnehmung auf, welche als Prisma ausgebildet ist und an seinen Seitenflanken 22 Stützteile 11 aufweist. Die Lünette 7 ist auf dem Schleiftisch 25 derart angeordnet, dass die durch die Stützteile bei ihrem an der Lagerstelle 9 anliegenden Kontakt gebildeten Stützlinien 20 (mit ihrem in der Figur dargestellten rechten Stützteil 7) ca. 7° unter der Werkstückmitte angeordnet sind. Das bedeutet, dass das Stützprisma insgesamt bezüglich der Werkstücklängsachse und der Schleifscheibenrotationsachse, welche auf einer Ebene liegen, untermittig angeordnet ist.

In Figur 2 ist die abstützende Position der Lünette durch gestrichelte Linien dargestellt, wohingegen die zurückgezogene Position, in welcher beispielsweise eine Entnahme bzw. Neuaufspannung des Werkstückes vorgenommen werden kann, mittels durchgezogener Linien dargestellt ist. Der Winkel α von ca. 7° hat sich beim Schleifen als besonders vorteilhaft erwiesen, da die abzustützende Lagerstelle 9 nie 100%ig exakt rund ist. Durch diese untermittige Anordnung der unmittelbaren Abstützung der zu schleifenden Lagerstelle 9 werden die Rundheitsfehler an der Lagerstelle während des Schleifens nicht fortlaufend auf die zu schleifende Lagerstelle wieder abgebildet, wie das im Stand der Technik der Fall ist, wenn eine Abstützung der Lagerstelle bezüglich der Winkelhalbierenden zwischen den beiden Stützteilen auf derselben Ebene von Rotationsachse der Schleifscheibe und Werkstücklängsachse 5 liegt.

Bei dem vorliegenden Ausführungsbeispiel ist in Figur 2 dargestellt, dass die Winkelhalbierende zwischen den Stützteilen 11 des Prismas 10 der Lünette 7 durch die Werkstücklängsachse 5 verläuft, d.h. deutlich außerhalb der durch die Werkstücklängsachse und die Rotationsachse der Schleifscheibe ausgebildeten Ebene liegt. Der Winkel der Winkelhalbierenden zwischen den Stützteilen liegt bei diesem Ausführungsbeispiel bei ca. 67°, mittels welcher die Lagerstelle durch das anliegende Prisma 20 untermittig abgestützt ist. Dieser Winkel von 67° der Winkelhalbierenden ist von der jeweiligen Schleifaufgabe und den jeweiligen Schleifbedingungen abhängig und kann durch einfache Versuche optimiert werden. In überraschender Weise hat sich gezeigt, dass mit dieser Anordnung des Prismas Lagerstellen mit Rundheitsfehlern von zum Teil deutlich weniger als 1 µm geschliffen werden können. Diese geringen Rundheitsfehler sind unter anderem auch deshalb erreichbar, weil die Lünette einerseits eine hohe Steifigkeit und andererseits den Vorteil einer Bewegung auf einer ebenfalls CNC-gesteuerten Zustellachse aufweist. Dadurch nämlich kann der Lünettenarm mit dem Abstützprisma und den eigentlichen stützenden Stützteilen unter definierten Bedingungen auf einem definierten Bewegungsweg an die abzustützende Lagerstelle 9 zugestellt werden. Mittels der durch eine Gewindespindel 13 realisierten Zustellung der Lünette an die abzustützende Lagerstelle exakt entlang der Winkelhalbierenden ist sichergestellt, dass die Mitte der Lagerstelle in Richtung der Zustellachse der Schleifscheibe definiert gehalten wird. Die Bewegung des Stützprismas entlang der CNC-gesteuerten Achse auf der Winkelhalbierenden wird mittels eines Servomotors 12 gewährleistet, welcher über eine in einem Gehäuse 16 angeordnete Kupplung17 auf die zum Zustellen des Abstützprismas 10 aus der zurückgezogenen Position in die abstützende Position vorgesehenen Gewindespindel 13, vorzugsweise in der Art einer Kugelumlaufspindel, wirkt. Die Lünette ist auf dem Schleiftisch 25 mittels eines Halters befestigt, welcher eine Schwalbenschwanzführung 14 aufweist.

Der in der Schleifscheibe 4 dargestellte, nach unten gerichtete Pfeil stellt die Rotationsrichtung der Schleifscheibe dar. Der zum Werkstück weisende, nach oben gerichtete Pfeil stellt die Rotationsbewegung des Werkstückes dar. Der im oberen Teil der Figur dargestellte Doppelpfeil stellt die CNC-gesteuerte Zustellbewegungsachse der Lünette aus der zurückgezogenen in die abstützende Position und zurück dar. Die Rotationsrichtung von Schleifscheibe und/oder Werkstück kann aber auch umgekehrt sein.

Die Stützteile 11 sind als CBN- oder PKD-beschichtete Platten ausgebildet, welche mit der Lagerstelle 9 des Werkstückes 6 in der abstützenden Position der Lünette in direktem Kontakt sind. Das bedeutet, dass die Lagerstelle 9 des Werkstückes 6 auf diesen Stützteilen 11 in theoretischem Linienkontakt in Form von Stützlinien 20 gleitet. Je nach Werkstoff oder Schleifbedingungen werden die Stützteile mittels CBN (kubisches Bornitrid) oder PKD (polykristalliner Diamant) eingesetzt. Der Vorteil dieser Werkstoffe besteht darin, dass diese eine hohe Verschleißfestigkeit aufweisen.

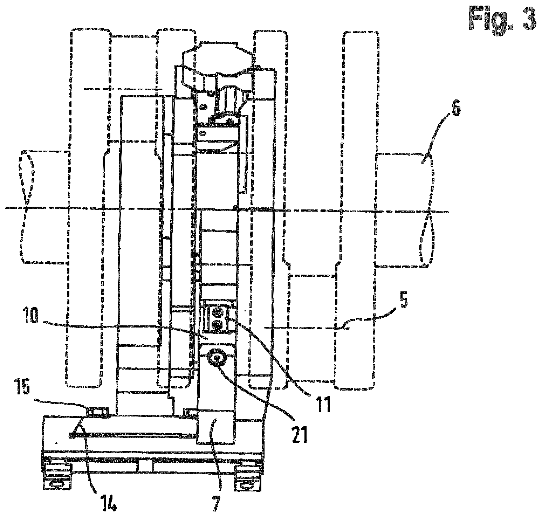

In Figur 3 ist eine Vorderansicht auf die Lünette dargestellt, in Blickrichtung des in Figur 2 dargestellten und mit V bezeichneten Richtungspfeiles gezeigt. Der untere Halter zur Verbindung der Lünette mit dem Schleiftisch 25 weist eine Schwalbenschwanzführung 14 auf. Die Führung wird mittels Klemmschrauben 15 in einer definierten eingestellten Stellung geklemmt. Mit dieser steifen und eine definierte Führung gewährleistenden Verstellung wird die Lünette 7 mit ihrem Stützprisma 10 so eingestellt, dass sie zentrisch auf die abzustützende Lagerstelle 9 eingestellt ist. Das bedeutet, dass die beiden abstützenden Stützteile 11 gleichzeitig und gleichmäßig am Werkstück 6 anliegen und die Zustellachse der Lünette aus der zurückgezogenen in die abstützenden Positionen entlang der Winkelhalbierenden zwischen den beiden Stützteilen des Prismas erfolgt. Diese so genannte Mitteneinstellung muss einmalig vorgenommen werden und wird nach der Justierung in geklemmtem Zustand gehalten.

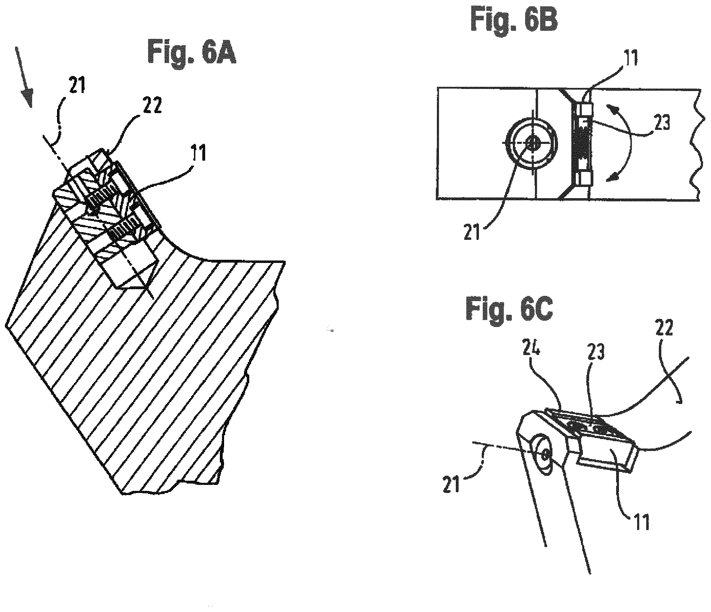

Die Stützteile 11 sind in der gezeigten Darstellung in der Vorderansicht gezeichnet. Ersichtlich ist, dass die Stützteile an den Seitenflanken des Prismas mittels zweier Schrauben befestigt und als eine durchgehende Stützplatte ausgebildet sind. Ebenfalls dargestellt ist die Pendelachse 21 des weiteren Stützteiles an dem Prisma 10 (siehe auch Beschreibung zu den Figuren 6B bis 6C).

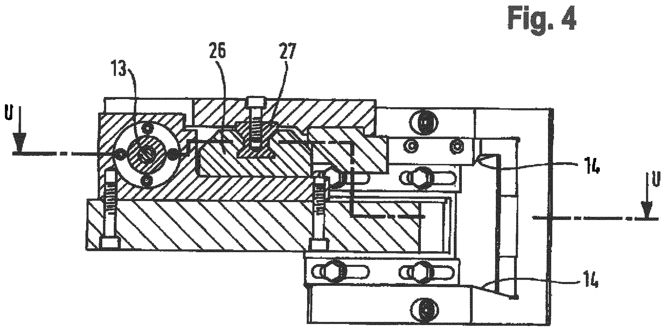

Figur 4 stellt eine Teilschnittansicht gemäß Figur 2 entlang der Schnittebene W-W dar. Gezeigt ist die Führung zur linearen Bewegung des Stützprismas. Die Führung erfolgt auf einer Führungsschiene 27, welche in einem Führungswagen 26 aufgenommen ist. Der Antrieb erfolgt über die Gewindespindel 13. Auf der Führungsschiene 27 sind spielfrei vorgespannte Kugel- oder Rollenumlaufschuhe aufgesetzt. Dargestellt ist die Position der Gewindespindel 13 nahe an der Führungsschiene 27.

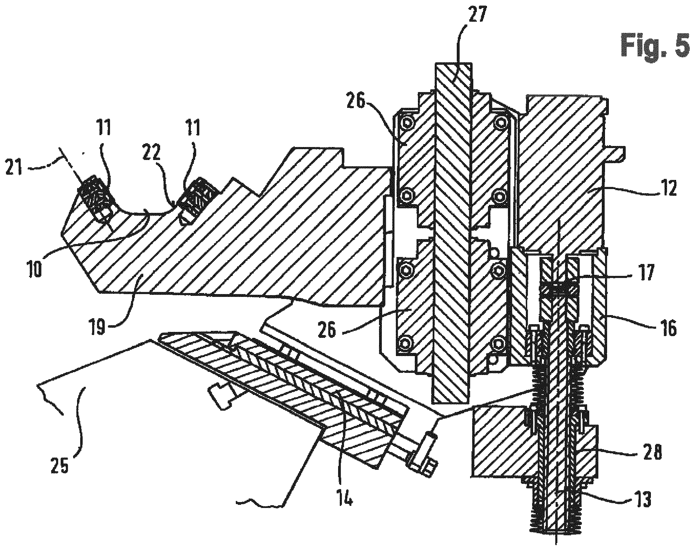

In Figur 5 ist ein Teilschnitt durch die Lünette gezeigt, bei welchem die Führungsschiene 27 mit den Führungswagen 26 dargestellt ist. Außerdem ist der Antrieb mittels des CNC-gesteuerten Stellmotors 12 für das Anstellen des Stützprismas 10 an die abzustützende Lagerstelle gezeigt. Der Antrieb zum Verstellen des Stützprismas entlang der Winkelhalbierenden zwischen den Stützteilen 11 erfolgt mittels der Gewindespindel 13, welche zumindest teilweise in dem Gehäuse 16 gelagert ist. In dem Gehäuse 16 ist eine Kupplung 17 angeordnet, mittels welcher der Stellmotor 12 an die Gewindespindel 13 gekuppelt ist. Mittels der anforderungsbedingten Programmierung des CNC-gesteuerten Stellmotors 12 erfolgt die Zustellbewegung des Stützprismas 10 in die Steuerung der Schleifmaschine mit höchstmöglicher Genauigkeit. Die Gewindespindel 13 ist außerdem mittels einer Gewindemutter 28 gehalten.

Die Lünette ist auf dem Schleiftisch 25 mittels der Halterung befestigt, von welcher die Schwalbenschwanzführung 14 in der Zeichnung in geschnittener Darstellung gezeigt ist. Der Lünettenarm 19 hat an seinem vorderen Ende das Prisma 10, an dessen Seitenflanken die Stützteile 11 angeordnet sind. Dargestellt ist ebenfalls, dass die Stützteile 11 um die Pendelachse 21 pendelnd gelagert angebracht sind. Die Pendelachse der jeweiligen Stützteile verläuft 90°, d.h. senkrecht zur Mittellängsachse des abzustützenden Werkstücks bei einer Blickrichtung von der Seite, d.h. aus Richtung der Schleifscheibe, welche in Figur 5 nicht dargestellt ist. Die dargestellte Teilschnittansicht entspricht einer Schnittebene U-U gemäß Figur 4.

Figur 6A zeigt eine Teilschnittansicht in vergrößerter Darstellung eines an einer Seitenflanke des Stützprismas angeordneten Stützteils 11. Ersichtlich ist, dass die Stützteile 11 über die Oberfläche der Seitenflanken 22 hinausragen, und zwar in Richtung in das Innere des Prismas, damit die Stützteile beim Anlegen an das zu stützende, gegebenenfalls gerade zu schleifende Werkstück mittels der Stützlinie den entsprechenden abstützenden Kontakt gewährleisten können. Das Stützteil 11 ist lösbar auf einem Schwenkbolzen befestigt, welcher eine Pendelbewegung des Stützteils um die Pendelachse bzw. Schwenkachse 21 gewährleistet. Der Vorteil einer derartigen pendelnden Aufnahme der Stützteile besteht darin, dass gegebenenfalls nicht exakt oder bewusst nicht zylindrisch ausgebildete, abzustützende Lagerstellen eine stets gleichbleibende zuverlässige und genau definierte Anlage des Stützteiles an der abzustützenden Lagerstelle, d. h. an deren Oberfläche, gewährleisten. Durch diese pendelnde Lagerung des Stützteiles wird jedenfalls verhindert, dass bei Abweichung der abzustützenden Lageroberfläche von einer exakt zylindrischen Form eine Kante oder die Kanten des Stützteiles sich in die Oberfläche des abzustützenden Werkstückes sozusagen eingraben. Das dargestellte Stützteil weist zwei Stützbereiche auf, welche an den Seiten des plättchenförmig ausgebildeten Stützteiles angeordnet sind und durch eine so genannte Mittelnut 23 voneinander getrennt sind. Der Vorteil einer derartigen Ausbildung besteht darin, dass durch die Mittelnut für jedes Stützteil zwei Stützbereiche ausgebildet werden, welche ein zuverlässiges Abstützen gewährleisten, aber gleichzeitig nur einen kurzen Linienkontakt ausbilden, so dass die Auswirkungen des Anlegens der Lünette an einen bereits geschliffenen Bereich einer Lagerstelle weiter reduziert werden.

In Figur 6B ist eine derartige Ausbildung des Stützteiles in Draufsicht gemäß dem in Figur 6A gezeigten Pfeil dargestellt. Der in der Figur 6B gezeigte Doppelpfeil deutet die Schwenkbarkeit des Stützteiles 11 um die Pendelachse 21 an.

Und schließlich ist in Figur 6C in perspektivischer Darstellung ein derartiges pendelnd gelagertes Stützteil 11 gezeigt. Durch die Mittelnut 23 werden am Stützteil 11 an beiden Seiten je ein Stützabschnitt ausgebildet. Die Verschwenkung, d.h. das Pendeln des Stützteiles 11, erfolgt entlang der Pendelachse 21. Angedeutet ist des Weiteren ein Teil der Seitenflanke 22 des Prismas.

Durch die Ausbildung dergestalt, dass die Stützteile jeweils zwei Stützlinien 20 bildende Auflagen aufweisen und zusätzlich noch pendelnd gelagert sind, liegen die Stützteile am abzustützenden Werkstück 6 an dessen Oberfläche, d.h. an der Oberfläche der Lagerstelle 9, absolut gleichmäßig an, auch wenn die Lagerstelle beispielsweise Formfehler in Bezug auf Zylindrizität oder eine (gewollte) gewisse Konizität aufweisen sollte. Weiter vorteilhaft ist, dass die Lagerstelle 9 im Prisma noch stabiler aufliegt, ohne dass eine so genannte überbestimmte Auflage vorhanden ist. Bei einer derartigen Ausbildung ist die abzustützende Lagerstelle an allen vier Auflagepunkten bzw. kurzen Stützlinien 20 absolut gleichmäßig an die Lagerstelle angelegt. Dadurch wird eine optimierte Stützauflage des Werkstückes durch die Lünette erreicht.

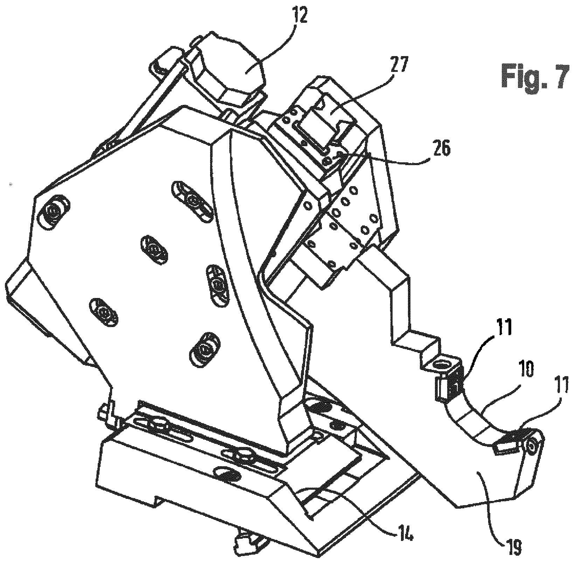

In Figur 7 ist die Lünette in perspektivischer Ansicht als komplette Baueinheit dargestellt. Insbesondere sind der Lünettenarm 19, das Prisma 10, die pendelnd gelagerten Stützteile 11, die Führungswagen 26 mit der Führungsschiene 27, der CNC-gesteuerte Stellmotor 12 sowie die Halterung zur Befestigung am Schleiftisch mit der Schwalbenschwanzführung 14 zu erkennen. Diese erfindungsgemäße Lünette weist eine hohe Kompaktheit auf und kann dadurch in ihrer Ausbildung die ausgesprochen hochqualitativen Schleifergebnisse erreichen.

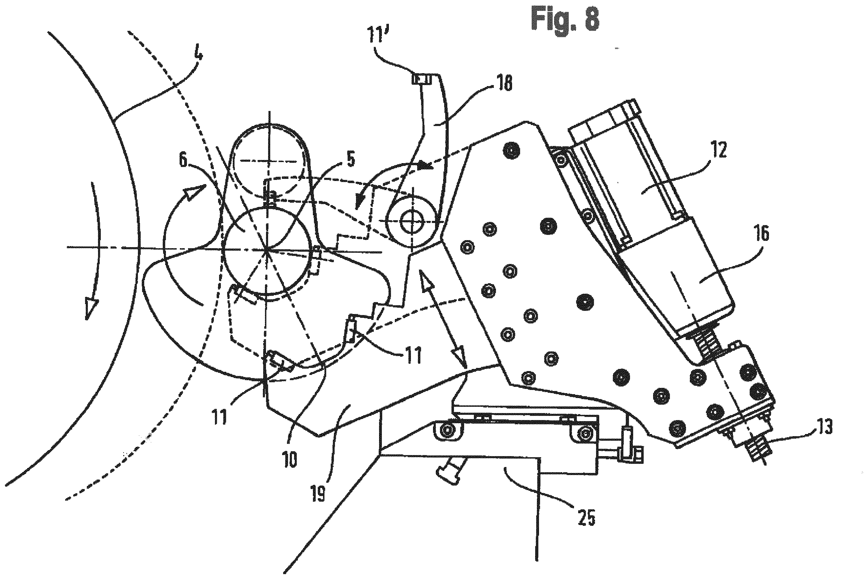

In Figur 8 ist ein weiteres Ausführungsbeispiel der Lünette dargestellt. Die Ansicht von Figur 8 entspricht der Teilseitenansicht gemäß Figur 2 mit dem Unterschied, dass gemäß diesem Ausführungsbeispiel an der Lünette ein zusätzlicher Schwenkhebel 18 mit einem weiteren Stützteil 11' vorgesehen ist. Diese Ausgestaltung der Lünette ist besonders dann erforderlich und sinnvoll, wenn beim Schleifen am zu schleifenden Werkstück unterschiedliche Schleifkräfte auf das Werkstück einwirken. Dies ist beispielsweise beim Pendelhubschleifen oder beim Schleifen von nicht zylindrischen Elementen wie beispielsweise Nocken der Fall. Durch das Anlegen des Schwenkhebels 18 wird mittels des zusätzlichen dritten Stützteiles 11' eine so genannte Dreipunktstützwirkung erreicht. Dadurch wird eine stabilisierte exakte, mittels der Lünette realisierte Abstützung des zu schleifenden Werkstückes erreicht.

Im vorliegenden Ausführungsbeispiel wird der Schwenkhebel 18 von oben an die abzustützende Oberfläche der Lagerstelle entweder pneumatisch oder hydraulisch eingeschwenkt, so dass das Werkstück stets exakt mit einer gewünschten Kraft auf dem Stützprisma aufliegt. Die Andrückkraft kann dabei zweckmäßigerweise über die jeweiligen Drücke der pneumatischen oder hydraulischen Stellaktoren für den Schwenkhebel 18 in einfacher Weise einstellbar geregelt bzw. gesteuert werden. Dabei können die jeweiligen Anpressdrücke exakt auf den Schleifprozess abgestimmt werden und sogar während des Schleifprozesses variabel an diesen anpassend geregelt werden. Eine elektrische Betätigung des Schwenkhebels 18 ist gleichermaßen denkbar, wobei die gewünschte Anpresskraft mittels eines Federelementes oder eines hydraulischen oder pneumatischen Elementes am Stützteil 11' realisierbar ist.

### Bezugszeichenliste

- 1: Maschinenbett
- 2: Kreuzschlitten
- 3: Schleifspindelstock
- 4: Schleifscheibe
- 5: Mittelllängsachse des Werkstückbereiches
- 6: Werkstück / Wellenteil
- 7: Lünette
- 8: Werkstückantrieb
- 9: Werkstückbereich
- 10: Prisma / prismenartige Abstützung
- 11, 11': Stützteile
- 12: Stellmotor
- 13: Gewindespindel
- 14: Schwalbenschwanzführung
- 15: Klemmschrauben
- 16: Gehäuse
- 17: Kupplung
- 18: Schwenkhebel
- 19: Lünettenarm
- 20: Stützlinien
- 21: Pendelachse
- 22: Seitenflanken des Prismas
- 23: Mittelnut
- 24: Stützabschnitt
- 25: Schleiftisch
- 26: Führungswagen
- 27: Führungsschiene
- 28: Gewindemutter

## Patentansprüche

1. Schleifmaschine zum Schleifen von zentrischen und/oder exzentrischen Werkstückbereichen (9) an Werkstücken (6), insbesondere Lagerstellen von insbesondere Kurbelwellen, mit einer Lünette (7) zum Abstützen der zentrischen Werkstückbereiche (9), welche zum Schleifen aus einer zurückgezogenen in eine Abstützposition an den Werkstückbereich bringbar ist und zumindest zwei an den Werkstückbereich (9) zustellbare Stützteile (11) aufweist, welche den Werkstückbereich (9) an jeweiligen voneinander bestandenen Umfangsbereichen abstützen, wobei das Werkstück (6) mit seinem Werkstückbereich (9) in der Abstützposition abgestützt ist, und mit einer Steuervorrichtung, mittels welcher während des Schleifens oder nach dem Schleifen eines Werkstückbereiches (9) mittels einer Schleifscheibe (4) die Lünette (7) an einen zentrischen Werkstückbereich anstellbar und die Schleifscheibe (4) bis zum Fertigmaß der Lagerstelle zustellbar sind, **dadurch gekennzeichnet, dass** die Stützteile (11) der Lünette (7) unter Bildung eines Öffnungswinkels zueinander an je einer Seitenflanke (22) eines eine Gabel bildenden, zwei Schenkel aufweisenden sich öffnenden Prismas (10) an einem Lünettenarm (19) in fester Position zueinander und zum Lünettenarm (19) und in der Abstützposition untermittig zur Längsachse (5) des Werkstückbereiches (9) derart in der Schleifmaschine angeordnet sind, dass eine zwischen beiden Stützteilen (11) gebildete Winkelhalbierende einen festen spitzen Winkel zur durch die Längsachse (5) des Werkstückbereiches (9) verlaufenden Senkrechten aufweist, und die Lünette (7) eine CNC-Zustellachse ausgebildet hat, mittels welcher sie an den Werkstückbereich (9) entlang dieser Winkelhalbierenden CNC-gesteuert zustellbar ist.

2. Schleifmaschine nach Anspruch 1, mit einer darin derart angeordneten Lünette (7), dass die Winkelhalbierende einen derartigen Winkel zur Senkrechten bildet, dass beim Schleifen ausgeübte resultierende Kräfte den Werkstückbereich (9) in das Prisma (10) an die Stützteile (11) lagefixierend drücken.

3. Schleifmaschine nach einem der Ansprüche 1 oder 2, bei welcher die Lünette (7) so ausgebildet ist, dass die Abstützposition eine Endposition der Zustellung ist und das Prisma (10) in der Endposition an einer fertiggeschliffenen Lagerstelle (9) anliegt.

4. Schleifmaschine nach einem der Ansprüche 1 bis 3, bei welcher die Lünette so ausgebildet ist, dass die Abstützposition eine Position der Zustellung bei noch vorhandenem Schleifaufmaß ist und beim Schleifen, die Lagerstelle (9) stützend, das Prisma (10) mit den Stützteilen (11) bis zum Fertigmaß nachführbar ist.

5. Schleifmaschine nach Anspruch 4, bei welcher die CNC-gesteuerte Zustellung des Prismas (10) der Lünette (7) synchron zur Schleifscheibenzustellung realisierbar ist.

6. Schleifmaschine nach einem der Ansprüche 1 bis 5, welche eine Messvorrichtung aufweist, welche Messsignale des Durchmessers des Werkstückbereiches (9) für die Zustellposition der Lünette (7) und die X-Achsen-Position der Schleifscheibe (4) an der Lagerstelle an die Steuereinrichtung übermittelt, auf Basis welchen die Zustellpositionen der Lünette (7) und der Schleifscheibe (4) gesteuert sind.

7. Schleifmaschine nach einem der Ansprüche 1 bis 6, bei welcher die Lünette (7) mittels der Steuereinrichtung der X-Achsen-Position der Schleifscheibe (4) nachführbar ist.

8. Schleifmaschine nach einem der Ansprüche 1 bis 7, bei welcher mittels der Steuereinrichtung auf die CNC-gesteuerte X-Achse der Schleifscheibe (4) eine zusätzliche Rundheitskorrektur auf die Zustellwerte der Schleifscheibe (4) in der Art einer Überlagerung aufprägbar ist.

9. Schleifmaschine nach einem der Ansprüche 1 bis 8, **dadurch gekennzeichnet, dass** der Lünettenarm (19) mittels nur eines auf eine Gewindespindel (13) arbeitenden Stellmotors (12) zwischen der zurückgezogenen und der Abstützposition bewegbar ist.

10. Schleifmaschine nach einem der Ansprüche 1 bis 9, **dadurch gekennzeichnet, dass** ein am Lünettenarm (19) angeordneter Schwenkhebel (18) vorgesehen ist, welcher an seinem der Schwenkachse gegenüberliegenden Endbereich ein zusätzliches Stützteil (11') aufweist, mittels welchem beim Schwenken des Schwenkhebels (18) in seine Anlageposition an den Werkstückbereich (9) dieser zusätzlich abstützbar und an den Werkstückbereich (9) andrückbar ist.

11. Schleifmaschine nach Anspruch 10, **dadurch gekennzeichnet, dass** das Schwenken des Schwenkhebels (18) hydraulisch, pneumatisch oder elektrisch erfolgt.

12. Schleifmaschine nach Anspruch 10 oder 11, **dadurch gekennzeichnet, dass** der Schwenkhebel (18) in seiner Anlageposition eine mittels Feder erzeugte Anpresskraft des zusätzlichen Stützteils (11') auf den Werkstückbereich (9) ausübt.

13. Schleifmaschine nach einem der Ansprüche 1 bis 12, **dadurch gekennzeichnet, dass** die Stützteile (11, 11') ebenflächige, konvex gekrümmte oder mittels einer Mittelnut (23) in zumindest zwei Stützabschnitte (24) aufgeteilte Oberflächen aufweisen.

14. Schleifmaschine nach einem der Ansprüche 1 bis 13, **dadurch gekennzeichnet, dass** die Stützteile (11, 11') CBN- oder PKD-Oberflächen aufweisen.

15. Schleifmaschine nach einem der Ansprüche 1 bis 14, **dadurch gekennzeichnet, dass** die Stützteile (11) an den Seitenflanken (22) des Prismas (10) um eine senkrecht zur Längsachse (5) des Werkstückbereiches (6) verlaufende Achse (21) pendelnd gelagert sind.

## Claims

1. Grinding machine for grinding centric and/or eccentric workpiece regions (9) on workpieces (6), in particular bearing points of crankshafts in particular, comprising a steady rest (7) for supporting the centric workpiece regions (9), which for grinding can be brought from a retracted position into a supporting position against the workpiece region and has at least two supporting parts (11) which can be infed onto the workpiece region (9) and support the workpiece region (9) at respective circumferential regions spaced apart from one another, the workpiece (6) being supported by its workpiece region (9) in the supporting position, and comprising a control device, by means of which, during the grinding or after the grinding of a workpiece region (9) by means of a grinding disc (4), the steady rest (7) can be advanced onto a centric workpiece region and the grinding disc (4) can be infed to the final size of the bearing point, **characterized in that** the supporting parts (11) of the steady rest (7) are arranged in the grinding machine on a steady rest arm (19) in a fixed position in relation to one another and in relation to the steady rest arm (19), while forming an opening angle in relation to one another respectively on a side flank (22) of an opening prism (10) forming a fork and having two limbs, and in the supporting position below centre with respect to the longitudinal axis (5) of the workpiece region (9), in such a way that an angle bisector formed between the two supporting parts (11) has a fixed acute angle in relation to the perpendicular extending through the longitudinal axis (5) of the workpiece region (9), and the steady rest (7) has formed a CNC infeed axis, by means of which it can be infed in a CNC-controlled manner to the workpiece region (9) along this angle bisector.

2. Grinding machine according to Claim 1, comprising a steady rest (7) arranged therein in such a manner that the angle bisector forms such an angle in relation to the perpendicular that resultant forces exerted during grinding press the workpiece region (9) into the prism (10) in a positionally fixing manner against the supporting parts (11).

3. Grinding machine according to either of Claims 1 and 2, in which the steady rest (7) is formed such that the supporting position is an end position of the infeed and, in the end position, the prism (10) lies against a finished ground bearing point (9).

4. Grinding machine according to one of Claims 1 to 3, in which the steady rest is formed such that the supporting position is a position of the infeed still with a grinding allowance and, during grinding, the prism (10) can be adjusted with the supporting parts (11) to the final size while supporting the bearing point (9).

5. Grinding machine according to Claim 4, in which the CNC-controlled infeed of the prism (10) of the steady rest (7) can be accomplished synchronously with the infeed of the grinding disc.

6. Grinding machine according to one of Claims 1 to 5, which has a measuring device which transmits measuring signals of the diameter of the workpiece region (9) for the infeed position of the steady rest (7) and the x-axis position of the grinding disc (4) at the bearing point to the control device, on the basis of which the infeed positions of the steady rest (7) and the grinding disc (4) are controlled.

7. Grinding machine according to one of Claims 1 to 6, in which the steady rest (7) can be adjusted by means of the control device in terms of the x-axis position of the grinding disc (4).

8. Grinding machine according to one of Claims 1 to 7, in which, by means of the control device for the CNC-controlled x-axis of the grinding disc (4), an additional roundness correction can be imparted to the infeed values of the grinding disc (4) in the manner of an overlay.

9. Grinding machine according to one of Claims 1 to 8, **characterized in that** the steady rest arm (19) can be moved between the retracted position and the supporting position by means of only one servomotor (12) operating on a threaded spindle (13).

10. Grinding machine according to one of Claims 1 to 9, **characterized in that** a pivot lever (18) arranged on the steady rest arm (19) is provided, which lever has at its end region opposite from the pivot axis an additional supporting part (11'), by means of which, when pivoting the pivot lever (18) into its contact position against the workpiece region (9), it can be additionally supported and pressed against the workpiece region (9).

11. Grinding machine according to Claim 10, **characterized in that** the pivoting of the pivot lever (18) is performed hydraulically, pneumatically or electrically.

12. Grinding machine according to Claim 10 or 11, **characterized in that**, in its contact position, the pivot lever (18) exerts on the workpiece region (9) a pressing force of the additional supporting part (11') that is generated by means of a spring.

13. Grinding machine according to one of Claims 1 to 12, **characterized in that** the supporting parts (11, 11') have surfaces that are planar, convexly curved or divided into at least two supporting portions (24) by means of a central groove (23).

14. Grinding machine according to one of Claims 1 to 13, **characterized in that** the supporting parts (11, 11') have CBN or PCD surfaces.

15. Grinding machine according to one of Claims 1 to 14, **characterized in that** the supporting parts (11) are mounted on the side flanks (22) of the prism (10) in a pendular manner about an axis (21) extending perpendicularly in relation to the longitudinal axis (5) of the workpiece region (6).

## Revendications

1. Rectifieuse destinée à la rectification de régions de pièce (9) centrées et/ou excentriques sur des pièces (6), en particulier des emplacements de paliers de vilebrequins en particulier, avec une lunette (7) destinée à soutenir les régions de pièce (9) centrées, qui peut, pour la rectification, être amenée à partir d'une position en retrait vers une position de soutien sur la région de pièce et qui présente au moins deux parties de soutien (11) qui peuvent être avancées sur la région de pièce (9) et qui soutiennent la région de pièce (9) sur des régions périphériques respectives espacées les unes des autres, la pièce (6) étant, avec sa région de pièce (9), soutenue dans la position de soutien, et avec un dispositif de commande au moyen duquel la lunette (7) peut être appliquée contre une région de pièce centrée pendant la rectification ou après la rectification d'une région de pièce (9) au moyen d'une meule (4), et la meule (4) peut être avancée jusqu'à la cote finale de la région de palier, **caractérisée en ce que** les parties de soutien (11) de la lunette (7) sont disposées dans la rectifieuse, en formant un angle d'ouverture les unes par rapport aux autres, chacune sur un flanc latéral (22) d'un prisme (10) qui s'ouvre, formant une fourche et présentant deux branches sur un bras de lunette (19) en position fixe les unes par rapport aux autres et par rapport au bras de lunette (19), et dans la position de soutien au-dessous du centre par rapport à l'axe longitudinal (5) de la région de pièce (9) de telle sorte qu'une bissectrice formée entre les deux parties de soutien (11) présente un angle aigu fixe par rapport à la verticale traversant l'axe longitudinal (5) de la région de pièce (9), et la lunette (7) a un axe d'avance CNC constitué, au moyen duquel elle peut être avancée vers la région de pièce (9) le long de cette bissectrice en étant commandée par CNC.

2. Rectifieuse selon la revendication 1, avec une lunette (7) qui y est disposée intérieurement de telle sorte que la bissectrice forme avec la verticale un angle tel que des forces résultantes exercées lors de la rectification pressent la région de pièce (9) dans le prisme (10) en la fixant en position sur les parties de soutien (11).

3. Rectifieuse selon l'une des revendications 1 ou 2, dans laquelle la lunette (7) est constituée de telle sorte que la position de soutien est une position extrême de l'avance, et le prisme (10), dans la position extrême, est adjacent à un emplacement de palier (9) entièrement rectifié.

4. Rectifieuse selon l'une des revendications 1 à 3, dans laquelle la lunette est constituée de telle sorte que la position de soutien est une position de l'avance quand la surépaisseur de rectification est encore présente et, lors de la rectification, en soutenant l'emplacement de palier (9), le prisme (10) avec les parties de soutien (11) peut être asservi en guidage jusqu'à la cote finale.

5. Rectifieuse selon la revendication 4, dans laquelle l'avance, commandée par CNC, du prisme (10) de la lunette (7) peut être réalisée de façon synchrone avec l'avance de la meule.

6. Rectifieuse selon l'une des revendications 1 à 5, qui présente un dispositif de mesure qui transmet au dispositif de commande des signaux de mesure du diamètre de la région de pièce (9) pour la position d'avance de la lunette (7) et la position d'axe X de la meule (4) sur l'emplacement de palier, sur la base desquels les positions d'avance de la lunette (7) et de la meule (4) sont commandées.

7. Rectifieuse selon l'une des revendications 1 à 6, dans laquelle la lunette (7) peut être asservie en guidage au moyen du dispositif de commande de la position d'axe X de la meule (4).

8. Rectifieuse selon l'une des revendications 1 à 7, dans laquelle, au moyen du dispositif de commande, sur l'axe X de la meule (4) commandé par CNC, une correction de rotondité supplémentaire peut être appliquée aux valeurs d'avance de la meule (4) à la façon d'une superposition.

9. Rectifieuse selon l'une des revendications 1 à 8, **caractérisée en ce que** le bras de lunette (19) peut, au moyen de seulement un servomoteur (12) agissant sur une broche filetée (13), être déplacé entre la position en retrait et la position de soutien.

10. Rectifieuse selon l'une des revendications 1 à 9, **caractérisée en ce qu'**un levier pivotant (18) disposé sur le bras de lunette (19) est prévu et présente sur sa région extrême opposée à l'axe pivotant, une partie de soutien (11') supplémentaire au moyen de laquelle, lors du pivotement du levier pivotant (18) dans sa position d'appui sur la région de pièce (9), ce levier peut être soutenu de façon supplémentaire et être pressé sur la région de pièce (9).

11. Rectifieuse selon la revendication 10, **caractérisée en ce que** le pivotement du levier pivotant (18) s'effectue de façon hydraulique, pneumatique ou électrique.

12. Rectifieuse selon la revendication 10 ou 11, **caractérisée en ce que**, dans sa position d'appui, le levier pivotant (18) exerce sur la région de pièce (9) une force de compression, produite par ressort, de la partie de soutien (11') supplémentaire.

13. Rectifieuse selon l'une des revendications 1 à 12, **caractérisée en ce que** les parties de soutien (11, 11') présentent des surfaces planes, courbées de façon convexe ou divisées au moyen d'une rainure centrale (23) en au moins deux tronçons de soutien (24).

14. Rectifieuse selon l'une des revendications 1 à 13, **caractérisée en ce que** les parties de soutien (11, 11') présentent des surfaces CBN ou PCD.

15. Rectifieuse selon l'une des revendications 1 à 14, **caractérisée en ce que** les parties de soutien (11) sont supportées sur les flancs latéraux (22) du prisme (10) de façon oscillante autour d'un axe (21) perpendiculaire à l'axe longitudinal (5) de la pièce (6).
